# EUROPÄISCHE PATENTSCHRIFT

(11) **EP 3 366 744 B1**
(45) Veröffentlichungstag und Bekanntmachung des Hinweises auf die Patenterteilung: **31.03.2021**
(21) Anmeldenummer: 17157610.1
(22) Anmeldetag: 23.02.2017
(51) Int. Cl.: C09J 127/24, F16L 47/02

(54) **KLEBSTOFFZUSAMMENSETZUNG ZUM VERKLEBEN VON FORMTEILEN AUS KUNSTSTOFF**
ADHESIVE COMPOSITION TO JOIN PARTS MADE OF PLASTIC
COMPOSITION ADHÉSIVE POUR LIER DES PIÈCES EN PLASTIQUE

(43) Veröffentlichungstag der Anmeldung: 29.08.2018
(73) Patentinhaber: Henkel AG & Co. KGaA, 40589 Düsseldorf (DE)
(72) Erfinder: BEUER, Bernd, 40789 Monheim (DE); TRAUTEN, Rita, 40593 Düsseldorf (DE); BÄTZGEN, Andre, 47059 Duisburg (DE); SCHÖTTMER, Bernhard, 40789 Monheim (DE)

(56) Entgegenhaltungen:
- EP-A1- 3 012 283
- WO-A1-2013/122458
- US-A- 5 470 894
- US-B1- 6 372 821
- Aldrich Chemical Co. ET AL: "Polymer Properties: Viscosity", Aldrich Polymer Products Application & Reference Information, 8. September 1999 (1999-09-08), Seiten 50-51, XP55397533, Gefunden im Internet: URL:https://www.sigmaaldrich.com/content/d am/sigma-aldrich/docs/Aldrich/General_Info rmation/viscosity.pdf [gefunden am 2017-08-09]

## Beschreibung

Die Erfindung liegt auf dem Gebiet der Klebemittel. Sie betrifft insbesondere ein Mittel zur Verklebung von Formteilen aus Kunststoff, insbesondere Kunststoff-Rohren, sowie ein Verfahren zum stoffschlüssigen Verbinden von Kunststoff-Rohren sowie einen Rohrverbund aus mindestens zwei Kunststoff-Rohren.

Bei der Verklebung von Formteilen aus Kunstoffen, wie z.B. aus PVC, beispielsweise von PVC-Druckrohren, sind solche Verklebungsmittel gebräuchlich, die ein festes Polymer, gelöst in einem geeigneten Lösemittel oder Lösemittelsystem enthalten. Das Klebeprinzip beruht auf dem Quell-, Löse- und Diffusionsvermögen der Lösemittel. Die Lösemittel diffundieren in das Grundmaterial, quellen es an und führen unter Mitwirkung des gelöst eingebrachten Polymeranteils bei der Verpressung der Fügeteile zum Verbund. Über einen nicht exakt zu definierenden Zeitraum desorbieren die Lösemittel, so dass eine homogene Verbindung erreicht wird. Dieses Prinzip der Klebetechnik wird z.B. in der Europäischen Patentanmeldung EP 0 197 481 A2 beschrieben. Dort wird ein entsprechendes Mittel zur Verklebung von Formteilen aus Hart-PVC auf Basis einer PVC-Lösung in einem cyclische PVC-Löser enthaltenden flüssigen Lösergemisch bei PVC-Feststoffgehalten von etwa 10 bis 30 Gew.-% beschrieben. Die dort beispielhaft beschriebenen Klebemassen enthalten als cyclische PVC-Löser alle jeweils Tetrahydrofuran und Cyclohexanon.

THF-freie Klebstoffrezepturen auf Basis einer PVC-Lösung in flüssigem Lösemittel, welches 2-Methyltetrahydrofuran umfasst, zur Verklebung von Formteilen aus Kunststoffen, insbesondere aus PVC, welche eine verlängerte Offenzeit aufweisen und insbesondere auch in dünnen Schichten eine verlängerte Offenzeit aufweisen, aber trotzdem zu einem sehr stabilen Klebverbund führen, werden beispielsweise in der Europäischen Patentanmeldung EP 2 687 571 A1 beschrieben. Weitere THF-freie Klebstoffzusammensetzungen zur Verklebung von Rohren aus PVC und PVC-C sind in EP 3 012 283 A1 beschrieben.

Obwohl es aus toxikologischen Gesichtspunkten wünschenswert ist auf THF als Lösemittel zu verzichten, weisen die bekannten THF-freien Klebstoffe Nachteile bei der Druckbeständigkeit bei erhöhter Temperatur, wie beispielsweise 60 bis 80°C, auf.

Ausgehend von diesem bekannten Stand der Technik war es die Aufgabe der vorliegenden Erfindung, alternative Klebstoffe mit universellen Einsatzmöglichkeiten bezüglich Druck, Temperatur und Material für die Verklebung von Formteilen aus Kunststoffen, neben PVC insbesondere auch ABS, zur Verfügung zu stellen. Derartige Klebstoffformulierungen sollen neben einer hohen Druck- und Temperaturbeständigkeit auch eine hohe Lagerstabilität sowie eine ausgezeichnete Kompatibilität mit den Kunststoffmaterialien aufweisen.

Diese Aufgabe wird vom Gegenstand der vorliegenden Erfindung gelöst. Es konnte überraschenderweise gefunden werden, dass die erfindungsgemäßen Zusammensetzungen druck- und temperaturstabil sind, d.h. auch bei Temperaturen von 60° oder sogar 80°C eine gute Druckstabilität aufweisen. Zudem zeigen sie eine gute Lagerstabilität, sind mit den Kunststoffmaterialien kompatibel, d.h. diese werden durch die enthaltenen Lösemittel nicht geschädigt, und weisen eine spezielle Viskositätsstruktur auf, die es erlaubt auf den Einsatz von Verdickungsmitteln zu verzichten.

Die erfindungsgemäßen Klebstoffzusammensetzungen zeichnen sich dadurch aus, dass es sich um Zusammensetzungen auf Basis einer Lösung eines PVC-C Harzes in flüssigem Lösemittel handelt, wobei das Lösemittel Butan-2-on umfasst oder daraus besteht.

In einem ersten Aspekt betrifft die Erfindung daher eine Klebstoffzusammensetzung zur Verklebung von Formteilen aus Kunststoff, insbesondere Kunststoff-Rohren, umfassend
(1) mindestens ein PVC-C Harz mit einem K-Wert ≤55, vorzugsweise 50-55, und vorzugsweise mit einem Chlorgehalt ≥65%, vorzugsweise 65 bis 70%; und
(2) mindestens ein flüssiges, organisches Lösemittel, in welchem das PVC-C Harz löslich ist, wobei als flüssiges, organisches Lösungsmittel Butan-2-on enthalten ist, dadurch gekennzeichnet, dass das mindestens eine PVC-C Harz, bezogen auf das Gesamtgewicht der Zusammensetzung, in einer Menge von 15 bis 25 Gew.-% enthalten ist und dass das Butan-2-on, bezogen auf das Gesamtgewicht der Zusammensetzung, in einer Menge von 70 bis 85 Gew.-% enthalten ist..

In einem weiteren Aspekt betrifft die Erfindung Verfahren zum stoffschlüssigen Verbinden von Kunststoff-Rohren, insbesondere Kunststoff-Rohren auf Basis thermoplastischer Kunststoffe, mittels Fitting, wobei
(a) auf die Fügeoberfläche des Fittings und/oder auf die Fügeoberflächen der damit zu verbindenden Rohrenden ein Klebstoff aufgebracht wird, und danach
(b) Rohre und Fitting zusammengeschoben werden, und danach
(c) Aushärtenlassen des Klebstoffes erfolgt,
dadurch gekennzeichnet, dass als Klebstoff eine erfindungsgemäße Klebstoffzusammensetzung eingesetzt wird.

Noch ein Aspekt richtet sich auf Verfahren zum stoffschlüssigen Verbinden von Kunststoff-Rohren, insbesondere Kunststoff-Rohren auf Basis thermoplastischer Kunststoffe,
wobei die Rohrverbindung durch Zusammenschieben eines ersten Rohrendes mit einem zweiten Rohrende erzielt wird, wobei das eine Rohrende einen Aufnahmerohrteil und das andere Rohrende einen Einsteckrohrteil darstellt,
wobei vor dem Zusammenschieben der Rohrenden auf zumindest eine der miteinander zu verbindenden Fügeteiloberflächen ein Klebstoff aufgebracht wird und nach dem Zusammenschieben ein Aushärtenlassen des Klebstoffes erfolgt, dadurch gekennzeichnet, dass als Klebstoff eine erfindungsgemäße Klebstoffzusammensetzung eingesetzt wird.

Schließlich betrifft die Erfindung auch einen Rohrverbund aus mindestens zwei Kunststoff-Rohren mit oder ohne Fitting-Einsatz zwischen den Rohrenden, geeignet für Trinkwasserleitungen, Brauchwasserleitungen und/oder zur Druckentwässerung, dadurch gekennzeichnet, dass die Fügeteiloberflächen der miteinander verbundenen Fügeteile mit einer erfindungsgemäßen Klebstoffzusammensetzung befestigt sind.

"Mindestens ein", bezogen auf einen Inhaltsstoff, bezieht sich auf die Art des Inhaltsstoffs und nicht auf die absolute Zahl der Moleküle. "Mindestens ein Lösemittel" bedeutet somit beispielsweise mindestens eine Art von Lösemittel, d.h. dass eine Art von Lösemittel oder eine Mischung mehrerer verschiedener Lösemittel verwendet werden kann. Zusammen mit Gewichtsangaben bezieht sich die Angabe auf alle Verbindungen der angegebenen Art, die in der Zusammensetzung/Mischung enthalten sind, d.h. dass die Zusammensetzung über die angegebene Menge der entsprechenden Verbindungen hinaus keine weiteren Verbindungen dieser Art enthält.

Alle Prozentangaben, die im Zusammenhang mit den hierin beschriebenen Zusammensetzungen gemacht werden, beziehen sich, sofern nicht explizit anders angegeben auf Gew.-%, jeweils bezogen auf die betreffende Mischung.

"Ungefähr" oder "ca.", wie hierin im Zusammenhang mit einem Zahlenwert verwendet bezieht sich auf den Zahlenwert ±10 %, vorzugsweise ±5%.

Gemäß verschiedenen bevorzugten Ausführungsformen weist die erfindungsgemäße Klebstoffzusammensetzung das mindestens eine PVC-C Harz, bezogen auf das Gesamtgewicht der Zusammensetzung, in einer Menge von 17 bis 23 Gew.-% auf.

PVC-C ist das Kurzzeichen nach DIN EN ISO 1043-1: 2002-06 für chloriertes Polyvinylchlorid. Chloriertes Polyvinylchlorid ist insbesondere herstellbar durch Chlorierung von Polyvinylchlorid (PVC) im Wirbelbett-, Dispersions- oder Lösungsverfahren und wird gewöhnlich als farbloses Pulver mit einem Chlor-Gehalt von vorzugsweise ca. 56-74 % und einer Dichte von vorzugsweise ca. 1,5-1,64 g/cm³ vermarktet. Durch die Chlorierung werden insbesondere die Thermostabilität und Wärmeformbeständigkeit des Polyvinylchlorids erhöht.

Das in den Zusammensetzungen gemäß der Erfindung bevorzugt verwendete PVC-C Harz hat einen Chlor-Gehalt von mindestens 65%, vorzugsweise 65 bis 70%.

Des Weiteren weist das eingesetzte PVC-C Harz einen K-Wert von 55 oder weniger, vorzugsweise 50-55, auf. Der K-Wert und Methoden zu seiner Bestimmung sind dem Fachmann bekannt. Der K-Wert ist eine relative Viskositätszahl, die bei 25°C bestimmt wird, vorzugsweise in Analogie zur DIN 53726 oder ISO 1628-2. Geeignete Harze werden beispielsweise in der internationalen Patentveröffentlichung WO 2013/122458 A1 beschrieben und können ausgehend von einem PVC-U Harz mit einem K-Wert von maximal 55 durch Chlorierung hergestellt werden.

Die eingesetzten PVC-C Harze sind in den eingesetzten Lösemitteln löslich, d.h. weisen eine Löslichkeit von mehr als 20g/80g Lösemittel bei Raumtemperatur (20°C) auf.

Die erfindungsgemäße Klebstoffzusammensetzung enthält als Lösemittel zwingend Butan-2-on. Die Menge an Butan-2-on in der Zusammensetzung beträgt dabei 70 bis 85 Gew.-%, insbesondere 70 bis 83 Gew.-%.

Butan-2-on kann als einziges Lösemittel oder in Kombination mit einem oder mehreren weiteren Co-Lösemitteln eingesetzt werden. Geeignete Co-Lösemittel sind beispielsweise ausgewählt aus cyclischen Ethern, alkylsubstituierten cyclischen Ethern, Cyclohexanon, 2-Methyl-Tetrahydrofuran, 2-Ethyl-Tetrahydrofuran, Tetrahydropyran, alkylsubstituiertem Tetrahydropyran, Methylal, Ethylal, Butylal, N-Methyl-2-pyrrolidon, N-Ethyl-2-pyrrolidon, Furan, 2-Methylfuran, 3-Methylfuran und/oder 2,5-Dimethylfuran. Besonders bevorzugt sind Cyclohexanon, Cyclopentylmethylether (CPME) und/oder 2-Methyl-Tetrahydrofuran (2-MeTHF). Die Menge derartige Co-Lösemittel in der Zusammensetzung beträgt allerdings vorzugsweise bis 10 Gew.%.

In verschiedenen Ausführungsformen der Erfindung sind die Zusammensetzungen im Wesentlichen frei von THF und/oder aliphatischen, cyclischen Kohlenwasserstoffen mit zwei Sauerstoffatomen im Ring, wie beispielsweise Dioxolan, insbesondere im Wesentlichen frei von THF. Es kann auch bevorzugt sein, dass die Zusammensetzungen im Wesentlichen frei von N-Methyl-2-pyrrolidon (NMP) ist. Die Menge derartiger Verbindungen in den Zusammensetzungen beträgt daher vorzugsweise weniger als 10 Gew.-%, vorteilhafterweise weniger als 5 Gew.-%, noch vorteilhafter weniger als 1 Gew.-%, insbesondere weniger als 0,1 % von Tetrahydrofuran (THF) oder aliphatischen, cyclischen Kohlenwasserstoffen mit zwei Ringsauerstoffatomen enthält, wie beispielsweise Dioxolan, oder NMP. Ganz besonders bevorzugt sind die Zusammensetzungen frei von solchen Verbindungen. "Frei von", wie in diesem Zusammenhang verwendet, bedeutet, dass der entsprechende Stoff nicht absichtlich zugesetzt wurde und insbesondere in Mengen kleiner als 0,5 Gew.-%, vorzugsweise kleiner als 0,1 Gew.-%, noch bevorzugter kleiner als 0,05 Gew.-%, am meisten bevorzugt kleiner als 0,01 Gew.-% enthalten ist.

Die Gesamtmenge an Lösemittel, welche in der Zusammensetzung vorteilhafterweise enthalten ist, beträgt vorzugsweise 70 bis 85 Gew.-%, bezogen auf das gesamte Zusammensetzung.

Ein besonders bevorzugtes erfindungsgemäßes Klebemittel umfasst gemäß einer bevorzugten Ausführungsform der Erfindung:
(1) 15 bis 25 Gew.-% PVC-C Harz
(2) 70 bis 85 Gew.-% Butan-2-on,
(3) 5-10 Gew.-% weiterer Lösungsmittel ausgewählt aus Cyclohexanon, Cyclopentylmethylether (CPME) und 2-Methyltetrahydrofuran (2-MeTHF).

Dabei enthält das Mittel vorzugsweise weniger als 10 Gew.-%, weiter bevorzugt weniger als 5 Gew.-%, vorteilhafterweise weniger als 1 Gew.-% und insbesondere gar kein THF und/oder cyclischen Ether mit 2 Sauerstoffatomen im Ring, wie beispielsweise Dioxolan, und/oder NMP.

In verschiedenen Ausführungsformen der Erfindung kann die erfindungsgemäße Klebstoffzusammensetzung Stabilisatoren, wie beispielsweise solche auf Calcium-, Calcium-Zink- oder Zinn-Basis umfassen. Diese sind typischerweise in Mengen von bis zu 3 Gew.-%, wie z.B. 0,1 bis 3 Gew.-%, vorzugsweise 0,2 bis 2 Gew.-%, bezogen auf das Gesamtgewicht der Zusammensetzung, in dieser enthalten.
Des Weiteren kann die Zusammensetzung bis zu 10 Gew.-%, wie z.B. 0,1 bis 10 Gew.-%" vorzugsweise bis zu 5 Gew.-% Additive enthalten.

Derartige Additive schließen beispielsweise Siliciumdioxid, vorzugsweise pyrogene Kieselsäure, insbesondere hydrophile pyrogene Kieselsäure ein, vorzugsweise in Mengen von 0,05 bis 4 Gew.-%, bezogen auf die gesamte Klebstoffzusammensetzung. Der optionale Einsatz des Siliciumdioxids führt im Zusammenspiel mit den übrigen Komponenten zu einem weiter verbesserten Eigenschaftsprofil der Klebemasse, insbesondere mit Blick auf die Optimierung von Offenzeit, Lagerstabilität und Verarbeitbarkeit der Klebmasse. Dabei hat sich insbesondere hydrophile pyrogene Kieselsäure bewährt, vorzugsweise solche mit einer spezifischen Oberfläche im Bereich von 100 m²/g bis 300 m²/g.

Weiterhin entspricht es einer bevorzugten Ausführungsform der Erfindung, wenn die erfindungsgemäße Klebstoffzusammensetzung eine oder mehrere Metallseifen enthält. In Abgrenzung zu den wasserlöslichen Natrium- und Kaliumsalzen der gesättigten und ungesättigten natürlichen und synthetischen Fettsäuren, Harzsäuren und Naphthensäuren bezeichnet man die wenig wasserlöslichen Metallsalze dieser Säuren als Metallseifen. Diese können insbesondere mit Lithium, Aluminium, Magnesium, Calcium, Mangan, Eisen, Zirconium, Cerium, Zink, Cobalt und/oder Vanadium als Kation formuliert sein. Besonders geeignete optional einsetzbare Metallseifen sind Calciumstearat, Calciumlaurat, Bariumstearat, Bariumlauart, Zinkstearat, Zinklaurat und/oder Magnesiumstearat. Die am meisten bevorzugte optional einsetzbare Metallseife ist Calciumstearat.

Die optional einsetzbare Metallseife, insbesondere Calciumstearat, kann vorteilhafterweise in eine Menge von 0,01 bis 2 Gew.-%, insbesondere 0,05 bis 1 Gew.-% in dem Klebemittel eingesetzt werden.

Der optionale Einsatz der Metallseife führt im Zusammenspiel mit den übrigen Komponenten ebenfalls zu einem weiter verbesserten Eigenschaftsprofil der Klebemasse, insbesondere mit Blick auf die Optimierung von Offenzeit, Lagerstabilität und Verarbeitbarkeit der Klebmasse. Dabei hat sich insbesondere Calciumstearat bewährt.

Weiterhin kann optional ein Carbonatsalz in dem Klebemittel enthalten sein, vorzugsweise Ammoniumcarbonat, vorteilhafterweise in einer Menge von 0,001 bis 1 Gew.-%, insbesondere 0,005 bis 0,5 Gew.-%.

Auch der optionale Einsatz des Carbonatsalzes führt im Zusammenspiel mit den übrigen Komponenten zu einem weiter verbesserten Eigenschaftsprofil der Klebemasse, insbesondere mit Blick auf die Optimierung von Offenzeit, Lagerstabilität und Verarbeitbarkeit der Klebmasse.

Die erfindungsgemäßen Mittel können außerdem synthetische Verdicker, vorteilhafterweise auf AcrylatBasis, wie vorzugsweise Acrylat-Copolymere, insbesondere in Mengen von 0 bis 2 Gew.-%, z.B. 0,01 bis 0,1 Gew.-% enthalten. Es ist aber ein Vorteil der vorliegenden Erfindung, dass auf solche Verdicker, wie z.B. Acrylat-Copolymere, auch ohne weiteres verzichtet werden kann, und dennoch eine adäquate Produktkonsistenz erzielbar ist. Unter den einsetzbaren synthetischen Verdickungsmitteln haben die Copolymere und Terpolymere von Acrylsäure und Methacrylsäure die größte Bedeutung.

Gemäß einer bevorzugten Ausführungsform der Erfindung handelt es sich bei den erfindungsgemäß zu verklebenden Formteilen aus Kunststoff um Rohre, Fittings und/oder Rohrleitungsbestandteile, insbesondere solche aus PVC oder ABS. Selbstverständlich kann die Erfindung auch bei allen übrigen Kunststoff-Formteilen, wie z.B. Regenrinnen, Plattenmaterial, wie z. B. Auffangwannen, Gehäusekästen etc. mit Erfolg eingesetzt werden.

Mit dem Begriff "Fitting" werden die Verbindungsstücke einer Rohrleitung bezeichnet. Diese Verbindungsstücke ermöglichen z.B. die insbesondere gerade Verbindung von Rohrstücken, aber auch Rohrverbindungen unter Richtungswechsel oder Durchmesserwechsel sowie die Verbindung zu Einbauteilen. Der Einsatz von Fittings ermöglicht insbesondere die einfache Anpassung des Rohrleitungsverlaufs an die äußeren Gegebenheiten, also z.B. das Umgehen von Hindernissen, die Ausführung von Verzweigungen und Durchmesserwechsel usw. Der Verlauf einer Rohrleitung kann den konstruktiven Erfordernissen somit einfach angepasst werden. Der Begriff "Fitting" ist überall in der Rohrleitungsplanung als auch in der Installationstechnik gebräuchlich.

Die Erfindung ermöglicht dauerhaft stabile, hochfeste Verbindungen der Formteile, insbesondere ermöglicht sie dauerhaft stabile, hochfeste Rohrverbindungen, welche eine Lebensdauer aufweisen, die der Lebensdauer eines Rohres entspricht und welche den allgemein üblichen Güte- und Prüfanforderungen, wie sie insbesondere auch für Druckrohrleitungen gelten, entsprechen. Die erfindungsgemäß erzielbare Klebeverbindung weist eine sehr gute Lichtbeständigkeit, eine sehr gute Lösemittelbeständigkeit, eine sehr gute Hydrolysebeständigkeit, sehr gute Tief- und Hochtemperaturbeständigkeit und eine sehr gute Schlagzähigkeit auf. Insbesondere ist auch eine sehr gute Scherfestigkeit der Klebeverbindung erzielbar. Der Klebstoff ist problemlos applizierbar, z.B. über Pinsel.

Im Sinne der Erfindung sind jegliche Formteile aus Kunststoff verklebbar, insbesondere solche auf Basis thermoplastischer Kunststoffe, vorzugsweise von PVC-U oder PVC-C aber auch ABS (AcrylnitrilButadien-Styrol), ASA (Acrylester-Styrol-Acrylnitril) oder ABS/ASA.

PVC, also Polyvinylchlorid, ist dem Fachmann bestens bekannt. Es kann technisch insbesondere durch Suspensionspolymerisation (S-PVC), Mikrosuspensionspolymerisation, Emulsionspolymerisation (E-PVC) und Substanzpolymerisation bzw. Massepolymerisation (M-PVC) hergestellt werden, wobei Suspensionspolymerisationsverfahren die weitaus größte Bedeutung haben.

PVC-U ist das Kurzzeichen nach DIN EN ISO 1043-1: 2002-06 für Hart-PVC, welches Gehalte an Weichmachern von vorzugsweise 0-12 Gew.-% aufweisen kann. Insbesondere sind erfindungsgemäß zu verklebende Formteile auf Basis PVC-U weichmacherfrei. Im Gegensatz dazu weist Weich-PVC Gehalte an Weichmachern >12 Gew.-% auf.

Der erfindungsgemäße Einsatz des Klebemittels führt bei der Verbindung von Kunststoff-, insbesondere PVC-Formteilen zu Verbindungen exzellenter Qualität und dauerhafter Belastbarkeit, insbesondere bei Rohren zu Rohrverbindungen von exzellenter Qualität und dauerhafter Belastbarkeit.

Die erfindungsgemäße Klebstoffzusammensetzung eignet sich hervorragend für die Rohrklebetechnik, sogar für den Einsatz bei korrosiven Medien unter hohen Temperaturen, aber auch für alle sonstigen Montage- und Reparaturarbeiten mit PVC-basierten Materialien (wie z. B. Regenrinnen). Die erfindungsgemäße Klebstoffzusammensetzung eignet sich insbesondere auch für Konstruktionsklebungen mit PVC-Plattenmaterial (wie z. B. Auffangwannen, Gehäusekästen).

Die erfindungsgemäßen Klebstoffe ergeben Druckbeständigkeiten von mindestens 1000 h bei Temperaturen von bis zu 80°C und Drucken von 8 bar nach einer Abbindezeit von 480h + 96h und Rohren aus ABS, PVC-C oder PVC-U (Bestimmung gemäß EN 14814 bzw.EN ISO 9311-3:2005). Die Scherfestigkeit (gemäß EN ISO 9311-2:2002) beträgt nach einer Abbindezeit von 1h >0,4 MPa, nach 24h >1,5 MPa, nach 480h +96h >10 MPa. Die Klebstoffe genügen damit der DIN Norm DIN EN 14814:2007.

Die Offenzeit der erfindungsgemäßen Klebstoffe beträgt vorzugsweise 2 bis 4 Minuten, die Lagerstabilität etwa 2 Jahre.

Ein weiterer Gegenstand der vorliegenden Erfindung ist ein Verfahren zum stoffschlüssigen Verbinden von Kunststoffrohren-Rohren mittels Fitting,
wobei
(a) auf die Fügeoberfläche des Fittings und/oder auf die Fügeoberflächen der damit zu verbindenden Rohrenden ein Klebstoff aufgebracht wird, und danach
(b) Rohre und Fitting zusammengeschoben werden, und danach
(c) Aushärtenlassen des Klebstoffes erfolgt,
wobei als Klebstoff eine erfindungsgemäße Klebstoffzusammensetzung wie zuvor beschrieben eingesetzt wird.

Ein weiterer Gegenstand der vorliegenden Erfindung ist ein Verfahren zum stoffschlüssigen Verbinden von Kunststoff-Rohren,
wobei die Rohrverbindung durch Zusammenschieben eines ersten Rohrendes mit einem zweiten Rohrende erzielt wird, wobei das eine Rohrende einen Aufnahmerohrteil und das andere Rohrende einen Einsteckrohrteil darstellt,
wobei vor dem Zusammenschieben der Rohrenden auf zumindest eine der miteinander zu verbindenden Fügeteiloberflächen ein Klebstoff aufgebracht wird und nach dem Zusammenschieben ein Aushärtenlassen des Klebstoffes erfolgt,
wobei als Klebstoff eine erfindungsgemäße Klebstoffzusammensetzung wie zuvor beschrieben eingesetzt wird.

Das Aufbringen des Klebemittels kann in den erfindungsgemäßen Verfahren prinzipiell auf jede mögliche Weise erfolgen. Es ist aber bevorzugt, dass das Aufbringen des Klebemittels mit Hilfe eines Auftragswerkzeuges, insbesondere durch Pinselauftrag erfolgt. Dadurch kann ein besonders gleichmäßiger Auftrag in gewünscht adäquater Dicke erreicht werden.

Um eine besonders gute Verbindung der Kunststoff-Rohre mit oder ohne Fitting im Sinne der Erfindung zu erzielen, ist es im Sinne einer bevorzugten Ausführungsform der Erfindung von Vorteil, wenn die Klebemittel-Filmstärke auf der Fügeteiloberfläche vordem Zusammenfügen im Bereich 0,1 mm bis 2 mm, vorzugsweise 0,2 mm bis 1,5 mm, insbesondere 0,2 mm bis 0,6 mm liegt. Diese Klebemittel-Filmstärken führen in Verbindung mit dem eingesetzten Klebemittel bei Kunststoff-, insbesondere PVC-Rohren zu Rohrklebungen mit ganz besonders hoher Lebensdauer.

Durch das Zusammenschieben von Rohr und Fitting oder Rohr und Rohr wird im Sinne der Erfindung die Klebeverbindung zwischen den Fügeteiloberflächen ermöglicht. Um eine ganz besondere dauerhaft sichere Rohrverbindung hervorbringen zu können, ist das erfindungsgemäße Verfahren im Sinne einer bevorzugten Ausführungsform vorteilhafterweise so auszuführen, dass das Zusammenschieben von Rohr und Fitting oder Rohr und Rohr ohne Verdrehen erfolgt.

Gemäß einer bevorzugten Ausführungsform der Erfindung zeichnet sich das erfindungsgemäße Verfahren dadurch aus, dass es sich bei den Rohren um Druckrohre handelt.

Druckrohre sind dem Fachmann an sich bekannt, sie werden für Druckrohrleitungen eingesetzt. Als Druckrohrleitung bezeichnet man eine Rohrleitung, in der im Gegensatz zu einer Freispiegelleitung ein größerer Druck herrscht als der atmosphärische Druck. Drucklose Anwendungen, also Gravitationsleitungen oder Freispiegelleitungen, können erfindungsgemäß selbstverständlich ebenfalls verwirklicht werden.

Die erfindungsgemäß bereitstellbaren Rohrverbindungen sind insbesondere für den Transport von Flüssigkeiten einsetzbar, besonders bevorzugt ist jedoch der Wassertransport.
Andere Medien sind jedoch ebenfalls ohne weiteres transportierbar, wie z.B. Glykolmischungen, welche z.B. als Kühlmittel Anwendung finden.

Gemäß einer bevorzugten Ausführungsform werden demnach die erfindungsgemäßen Rohrverbindungen insbesondere für Trinkwasserleitungen, Brauchwasserleitungen und/oder zur Druckentwässerung eingesetzt.

Ein weiterer Gegenstand der vorliegenden Erfindung ist ein Rohrverbund aus mindestens zwei Kunststoff-Rohren mit oder ohne Fitting-Einsatz zwischen den Rohrenden, geeignet für Trinkwasserleitungen, Brauchwasserleitungen und/oder zur Druckentwässerung, wobei die Fügeteiloberflächen der miteinander verbundenen Fügeteile mit einem erfindungsgemäßen Klebemittel, wie zuvor beschrieben, befestigt sind.

Alle hierin im Zusammenhang mit dem Klebstoff offenbarten Ausführungsformen sind natürlich auch auf die beschriebenen Verwendungen und Verfahren anwendbar und umgekehrt.

### Beispiele

Die folgenden Klebemittel wurden durch Mischen der Bestandteile unter Erwärmen auf 40°C hergestellt:

### Formulierung 1:

| | |
|---|---|
| Butan-2-on | 79,00 Gew.-% |
| PVC-C | 20,50 Gew.-% |
| Zinn-Stabilisator | <0,50 Gew.-% |

Formulierung 1 wurde mit drei verschiedenen PVC-C Harzen hergestellt und in Bezug auf die Druckfestigkeit von damit verklebten PVC-C Rohren bei 80°C und 8 bar getestet (gemäß EN ISO 9311 - 3:2005)

| | CPVC Harz 1 | CPVC Harz 2 | CPVC Resin |
|---|---|---|---|
| K-Wert | 52 | 50 | 57-60 |
| Chlor-Gehalt (%) | 67 | 68 | 64 |
| Dichte (g/l) | 620 | 480 | 228 |
| Löslichkeit in MEK | Sehr gut | Sehr gut | Sehr gut |
| **Druckfestigkeit bei 80°C** | **Bestanden** | **Bestanden** | **Unbefriedigend (Risse)** |

Die Ergebnisse zeigen, dass nur die erfindungsgemäßen PVC-C Harze mit einem K-Wert von 55 oder weniger die gewünschte Druckfestigkeit bei 80°C bei entsprechender Löslichkeit aufweisen.

## Patentansprüche

1. Klebstoffzusammensetzung zur Verklebung von Formteilen aus Kunststoff, insbesondere Kunststoff-Rohren, umfassend
(1) mindestens ein PVC-C Harz mit einem K-Wert ≤55 und
(2) mindestens ein flüssiges, organisches Lösemittel, in welchem das PVC-C Harz löslich ist, wobei als flüssiges, organisches Lösungsmittel Butan-2-on enthalten ist, **dadurch gekennzeichnet, dass** das mindestens eine PVC-C Harz, bezogen auf das Gesamtgewicht der Zusammensetzung, in einer Menge von 15 bis 25 Gew.-% enthalten ist und dass das Butan-2-on, bezogen auf das Gesamtgewicht der Zusammensetzung, in einer Menge von 70 bis 85 Gew.-% enthalten ist.

2. Klebstoffzusammensetzung nach Anspruch 1, **dadurch gekennzeichnet, dass** das mindestens eine PVC-C Harz, bezogen auf das Gesamtgewicht der Zusammensetzung, in einer Menge von 17 bis 23 Gew.-% enthalten ist.

3. Klebstoffzusammensetzung nach Anspruch 1 oder 2, **dadurch gekennzeichnet, dass** das mindestens eine PVC-C Harz einen K Wert von 50-55 aufweist und/oder dass das mindestens eine PVC-C Harz einen Chlorgehalt ≥65%, vorzugsweise 65 bis 70% aufweist.

4. Klebstoffzusammensetzung nach einem der Ansprüche 1 bis 3, **dadurch gekennzeichnet, dass** die Zusammensetzung ferner mindestens ein Co-Lösemittel enthält, das ausgewählt wird aus Cyclohexanon, Cyclopentylmethylether (CPME) und 2-Methyltetrahydrofuran (2-MeTHF).

5. Klebstoffzusammensetzung nach Anspruch 4, **dadurch gekennzeichnet, dass** das mindestens eine Co-Lösemittel bezogen auf das Gesamtgewicht der Zusammensetzung in einer Menge von bis zu 10 Gew.-% enthalten ist.

6. Klebstoffzusammensetzung nach einem der Ansprüche 1 bis 5, **dadurch gekennzeichnet, dass** die Zusammensetzung weniger als 20 Gew.-%, vorzugsweise weniger als 10 Gew.-%, vorteilhafterweise weniger als 5 Gew.-%, noch vorteilhafter weniger als 1 Gew.-%, insbesondere weniger als 0,1 Gew.-% Tetrahydrofuran (THF) oder aliphatischen, cyclischen Kohlenwasserstoffen mit zwei Ringsauerstoffatomen enthält, insbesondere frei von solchen Verbindungen ist.

7. Klebstoffzusammensetzung nach einem der Ansprüche 1 bis 6, **dadurch gekennzeichnet, dass** die Zusammensetzung ferner enthält:
(1) mindestens einen Stabilisator auf Calcium-, Calcium-Zink- oder Zinn-Basis, vorzugsweise in einer Menge, bezogen auf das Gesamtgewicht der Zusammensetzung, von bis zu 3 Gew.-%, besonders bevorzugt 0,2 bis 2 Gew.-%; und/oder
(2) mindestens ein Additiv, vorzugsweise in einer Menge, bezogen auf das Gesamtgewicht der Zusammensetzung, bis 10 Gew.-%, besonders bevorzugt 0,1 bis 5 Gew.-%.

8. Klebstoffzusammensetzung nach einem der Ansprüche 1 bis 7, **dadurch gekennzeichnet, dass** die Zusammensetzung 5-10 Gew.-% weiterer Lösungsmittel ausgewählt aus Cyclohexanon, Cyclopentylmethylether (CPME) und 2-Methyltetrahydrofuran (2-MeTHF) enthält.

9. Verfahren zum stoffschlüssigen Verbinden von Kunststoff-Rohren, insbesondere Kunststoff-Rohren auf Basis thermoplastischer Kunststoffe, mittels Fitting, wobei
(a) auf die Fügeoberfläche des Fittings und/oder auf die Fügeoberflächen der damit zu verbindenden Rohrenden ein Klebstoff aufgebracht wird, und danach
(b) Rohre und Fitting zusammengeschoben werden, und danach
(c) Aushärtenlassen des Klebstoffes erfolgt,
**dadurch gekennzeichnet, dass** als Klebstoff eine Klebstoffzusammensetzung nach einem der Ansprüche 1 bis 8 eingesetzt wird.

10. Verfahren zum stoffschlüssigen Verbinden von Kunststoff-Rohren, insbesondere Kunststoff-Rohren auf Basis thermoplastischer Kunststoffe,
wobei die Rohrverbindung durch Zusammenschieben eines ersten Rohrendes mit einem zweiten Rohrende erzielt wird, wobei das eine Rohrende einen Aufnahmerohrteil und das andere Rohrende einen Einsteckrohrteil darstellt,
wobei vor dem Zusammenschieben der Rohrenden auf zumindest eine der miteinander zu verbindenden Fügeteiloberflächen ein Klebstoff aufgebracht wird und nach dem Zusammenschieben ein Aushärtenlassen des Klebstoffes erfolgt, **dadurch gekennzeichnet, dass** als Klebstoff eine Klebstoffzusammensetzung nach einem der Ansprüche 1-8 eingesetzt wird.

11. Verfahren nach Anspruch 9 oder 10, **dadurch gekennzeichnet, dass**
(a) es sich bei den Rohren um Kunststoff-Rohre auf Basis thermoplastischer Kunststoffe handelt, insbesondere auf Basis PVC-U, PVC-C, ABS, ASA oder ABS/ASA; und/oder
(b) sich bei den Kunststoff-Rohren um Druckrohre handelt; und/oder
(c) die Rohrverbindung für Trinkwasserleitungen, Brauchwasserleitungen und/oder zur Druckentwässerung eingesetzt wird.

12. Rohrverbund aus mindestens zwei Kunststoff-Rohren mit oder ohne Fitting-Einsatz zwischen den Rohrenden, geeignet für Trinkwasserleitungen, Brauchwasserleitungen und/oder zur Druckentwässerung, **dadurch gekennzeichnet, dass** die Fügeteiloberflächen der miteinander verbundenen Fügeteile mit einer Klebstoffzusammensetzung nach einem der Ansprüche 1 bis 8 befestigt sind.

13. Rohrverbund nach Anspruch 12, **dadurch gekennzeichnet, dass**
(d) es sich bei den Rohren um Kunststoff-Rohre auf Basis thermoplastischer Kunststoffe handelt, insbesondere auf Basis PVC-U, PVC-C, ABS, ASA oder ABS/ASA; und/oder
(e) sich bei den Kunststoff-Rohren um Druckrohre handelt; und/oder
(f) die Rohrverbindung für Trinkwasserleitungen, Brauchwasserleitungen und/oder zur Druckentwässerung eingesetzt wird.

## Claims

1. An adhesive composition for adhesively bonding molded parts made of plastics material, in particular plastics pipes, comprising
(1) at least one PVC-C resin having a K value of ≤ 55 and
(2) at least one liquid organic solvent in which the PVC-C resin is soluble, butan-2-one being contained as the liquid organic solvent, **characterized in that** the at least one PVC-C resin is contained in an amount of 15 to 25 wt.%, based on the total weight of the composition, and **in that** the butan-2-one is contained in an amount of 70 to 85 wt.%, based on the total weight of the composition.

2. The adhesive composition according to claim 1, **characterized in that** the at least one PVC-C resin is contained in an amount of 17 to 23 wt.%, based on the total weight of the composition.

3. The adhesive composition according to claim 1 or 2, **characterized in that** the at least one PVC-C resin has a K value of 50-55 and/or **in that** the at least one PVC-C resin has a chlorine content of ≥ 65%, preferably 65 to 70%.

4. The adhesive composition according to one of claims 1 to 3, **characterized in that** the composition further contains at least one cosolvent selected from cyclohexanone, cyclopentyl methyl ether (CPME) and 2-methyltetrahydrofuran (2-MeTHF).

5. The adhesive composition according to claim 4, **characterized in that** the at least one cosolvent is contained in an amount of up to 10 wt.%, based on the total weight of the composition.

6. The adhesive composition according to one of claims 1 to 5, **characterized in that** the composition contains less than 20 wt.%, preferably less than 10 wt.%, advantageously less than 5 wt.%, more advantageously less than 1 wt.%, in particular less than 0.1 wt.%, tetrahydrofuran (THF) or aliphatic cyclic hydrocarbons having two ring oxygen atoms, in particular is free of such compounds.

7. The adhesive composition according to one of claims 1 to 6, **characterized in that** the composition further contains:
(1) at least one calcium-, calcium-zinc- or tin-based stabilizer, preferably in an amount of up to 3 wt.%, particularly preferably 0.2 to 2 wt.%, based on the total weight of the composition; and/or
(2) at least one additive, preferably in an amount of up to 10 wt.%, particularly preferably 0.1 to 5 wt.%, based on the total weight of the composition.

8. The adhesive composition according to one of claims 1 to 7, **characterized in that** the composition contains at least 5-10 wt.% of an additional solvent selected from cyclohexanone, cyclopentyl methyl ether (CPME) and 2-methyltetrahydrofuran (2-MeTHF).

9. A method for bonding plastics pipes, in particular plastics pipes based on thermoplastic materials, by means of a fitting, in which method
(a) an adhesive is applied to the joining surface of the fitting and/or to the joining surfaces of the pipe ends to be connected thereby, and subsequently
(b) the pipes and fitting are pushed together, and subsequently
(c) the adhesive is left to cure,
**characterized in that** an adhesive composition according to one of claims 1 to 8 is used as the adhesive.

10. The method for bonding plastics pipes, in particular plastics pipes based on thermoplastic materials,
the pipe connection being produced by pushing together a first pipe end and a second pipe end, one pipe end being a receiving pipe part and the other pipe end being an insertion pipe part,
an adhesive being applied, before the pipe ends are pushed together, to at least one of the joining part surfaces to be interconnected, and the adhesive being left to cure after said ends have been pushed together, **characterized in that** an adhesive composition according to one of claims 1 to 8 is used as the adhesive.

11. The method according to claim 9 or 10, **characterized in that**
(a) the pipes are plastics pipes based on thermoplastic materials, in particular based on PVC-U, PVC-C, ABS, ASA or ABS/ASA; and/or
(b) the plastics pipes are pressure pipes; and/or
(c) the pipe connection is used for drinking water pipes, service water pipes and/or for pressure drainage.

12. A pipe assembly consisting of at least two plastics pipes with or without a fitting insert between the pipe ends, suitable for drinking water pipes, service water pipes and/or for pressure drainage, **characterized in that** the joining part surfaces of the interconnected joining parts are attached by means of an adhesive composition according to one of claims 1 to 8.

13. The pipe assembly according to claim 12, **characterized in that**
(d) the pipes are plastics pipes based on thermoplastic materials, in particular based on PVC-U, PVC-C, ABS, ASA or ABS/ASA; and/or
(e) the plastics pipes are pressure pipes; and/or
(f) the pipe connection is used for drinking water pipes, service water pipes and/or for pressure drainage.

## Revendications

1. Composition adhésive permettant de coller des pièces moulées en plastique, en particulier des tuyaux en plastique, comprenant
(1) au moins une résine PVC-C dotée d'une valeur K ≤ 55 et
(2) au moins un solvant organique liquide dans lequel la résine PVC-C est soluble, de la butan-2-one étant contenue en tant que solvant organique liquide, **caractérisée en ce que** l'au moins une résine PVC-C est contenue en une quantité de 15 à 25 % en poids par rapport au poids total de la composition, et **en ce que** la butan-2-one est contenue en une quantité de 70 à 85 % en poids par rapport au poids total de la composition.

2. Composition adhésive selon la revendication 1, **caractérisée en ce que** l'au moins une résine PVC-C est contenue en une quantité de 17 à 23 % en poids par rapport au poids total de la composition.

3. Composition adhésive selon la revendication 1 ou 2, **caractérisée en ce que** l'au moins une résine PVC-C présente une valeur K de 50 à 55 et/ou **en ce que** l'au moins une résine PVC-C présente une teneur en chlore ≥ 65 %, de préférence de 65 à 70 %.

4. Composition adhésive selon l'une des revendications 1 à 3, **caractérisée en ce que** la composition contient en outre au moins un co-solvant choisi parmi la cyclohexanone, le cyclopentylméthyléther (CPME) et le 2-méthyltétrahydrofurane (2-MeTHF).

5. Composition adhésive selon la revendication 4, **caractérisée en ce que** l'au moins un co-solvant est contenu en une quantité allant jusqu'à 10 % en poids par rapport au poids total de la composition.

6. Composition adhésive selon l'une des revendications 1 à 5, **caractérisée en ce que** la composition contient moins de 20 % en poids, de préférence moins de 10 % en poids, avantageusement moins de 5 % en poids, encore plus avantageusement moins de 1 % en poids, en particulier moins de 0,1 % en poids de tétrahydrofurane (THF) ou d'hydrocarbures cycliques aliphatiques à deux atomes d'oxygène dans le cycle, la composition étant en particulier exempte de tels composés.

7. Composition adhésive selon l'une des revendications 1 à 6, **caractérisée en ce que** la composition contient en outre :
(1) au moins un stabilisant à base de calcium, de calcium-zinc ou d'étain, de préférence en une quantité allant jusqu'à 3 % en poids, de manière particulièrement préférée de 0,2 à 2 % en poids, par rapport au poids total de la composition ; et/ou
(2) au moins un additif, de préférence en une quantité allant jusqu'à 10 % en poids, de manière particulièrement préférée de 0,1 à 5 % en poids, par rapport au poids total de la composition.

8. Composition adhésive selon l'une des revendications 1 à 7, **caractérisée en ce que** la composition contient 5 à 10 % en poids d'autres solvants choisis parmi la cyclohexanone, le cyclopentylméthyléther (CPME) et le 2-méthyltétrahydrofurane (2-MeTHF).

9. Procédé de raccordement, par liaison de matière, de tuyaux en plastique, en particulier de tuyaux en plastique à base de matières thermoplastiques, au moyen d'un raccord,
(a) un adhésif étant appliqué sur la surface de jonction du raccord et/ou sur les surfaces de jonction des extrémités de tuyau destinées à être raccordées à celui-ci, puis
(b) les tuyaux et le raccord étant assemblés, puis
(c) l'adhésif étant mis à durcir,
**caractérisé en ce qu'**une composition adhésive selon l'une des revendications 1 à 8 est utilisée comme adhésif.

10. Procédé permettant le raccordement, par liaison de matière, de tuyaux en plastique, en particulier de tuyaux en plastique à base de matières thermoplastiques,
le raccordement de tuyaux étant réalisé en assemblant une première extrémité de tuyau avec une seconde extrémité de tuyau, une extrémité de tuyau représentant une partie de tuyau de réception et l'autre extrémité de tuyau représentant une partie de tuyau enfichable, un adhésif étant appliqué, avant l'assemblage des extrémités de tuyau, sur au moins l'une des surfaces de pièce de jonction à raccorder et, après l'assemblage, l'adhésif étant mis à durcir, **caractérisé en ce qu'**une composition adhésive selon l'une des revendications 1 à 8 est utilisée comme adhésif.

11. Procédé selon la revendication 9 ou 10, **caractérisé en ce que**
(a) les tuyaux sont des tuyaux en plastique à base de matières thermoplastiques, en particulier à base de PVC-U, PVC-C, ABS, ASA ou ABS/ASA ; et/ou
(b) les tuyaux en plastique sont des tuyaux sous pression ; et/ou
(c) le raccordement de tuyaux est utilisé pour des conduites d'eau potable, des conduites d'eau sanitaire et/ou pour le drainage sous pression.

12. Tuyau composite constitué d'au moins deux tuyaux en plastique comportant ou non un insert de raccord entre les extrémités de tuyau, approprié pour des conduites d'eau potable, des conduites d'eau sanitaire et/ou pour le drainage sous pression, **caractérisé en ce que** les surfaces des pièces de jonction raccordées entre elles sont fixées au moyen d'une composition adhésive selon l'une des revendications 1 à 8.

13. Tuyau composite selon la revendication 12, **caractérisé en ce que**
(d) les tuyaux sont des tuyaux en plastique à base de matières thermoplastiques, en particulier à base de PVC-U, PVC-C, ABS, ASA ou ABS/ASA ; et/ou
(e) les tuyaux en plastique sont des tuyaux sous pression ; et/ou
(f) le raccordement de tuyaux est utilisé pour des conduites d'eau potable, des conduites d'eau sanitaire et/ou pour le drainage sous pression.
